# EUROPEAN PATENT APPLICATION

(11) **EP 2 439 830 A1**
(43) Date of publication of application: **11.04.2012**
(21) Application number: 09740620.1
(22) Date of filing: 05.06.2009
(51) Int. Cl.: H02J 3/16, H02J 3/38

(54) **SYSTEM STABILIZATION DEVICE, METHOD, AND WIND-POWER GENERATION SYSTEM**

(71) Applicant: Mitsubishi Heavy Industries, Ltd., Tokyo 108-8215 (JP)
(72) Inventor: YASUGI, Akira, Nagasaki-shi Nagasaki 850-8610 (JP)
(74) Representative: Intès, Didier Gérard André
(86) International application number: PCT/JP2009/060321
(87) International publication number: WO 2010/140247

(57) **Abstract**

It is an object to supply stable reactive power without requiring large-scale civil engineering work. The invention provides a utility grid stabilization apparatus 2 to be applied to a generating system including a generator having a squirrel-cage induction generator 13 to generate electric power using natural energy and a connection switching section 14 provided between the generator and a utility grid 15 to switch between connection and disconnection of the generator and the utility grid 15 to and from each other, the apparatus including a reactive power regulating section 21 for supplying or absorbing reactive power to or from the utility grid 15 when voltage of the utility grid 15 satisfies a preset variation condition and the generator is disconnected from the utility grid 15.

## Description

### Technical Field

The present invention relates to utility grid stabilization apparatus and method, as well as a wind power generating system.

### Background Art

Conventionally, among wind power generating apparatuses to be interconnected, there is an apparatus using a squirrel-cage induction generator. In this apparatus, in a case where a failure or the like occurs in a utility grid thereof and voltage of the utility grid varies, the induction generator absorbs surplus reactive power from the utility grid and it is impossible to conform to interconnection specifications. Therefore, upon carrying out interconnection of the wind power generating apparatus employing the squirrel-cage induction generator, a device for compensating for the reactive power is known to be installed separately in a wind farm to conform to the interconnection specifications.
Patent Document 1: Japanese Unexamined Patent Application, Publication No. 2000-175360

### Disclosure of Invention

However, large-scale construction such as civil engineering work is required to separately install a reactive power compensator in the wind farm as described above and therefore it is difficult to install the reactive power compensator in an environment of the existing wind power generating system provided with the squirrel-cage induction generator.

The present invention has been made to solve the above problem, and it is an object thereof to provide a utility grid stabilization apparatus and method as well as a wind power generating system that do not require large-scale construction and that can supply stable reactive power.

To achieve the above object, the present invention employs the following sections.

A first aspect of the present invention recites a utility grid stabilization apparatus to be applied to a generating system including a generator having a squirrel-cage induction generator to generate electric power using natural energy and a connection switching section disposed between the generator and a utility grid to switch between connection and disconnection of the generator and the utility grid to and from each other, the apparatus including a reactive power regulating section for supplying or absorbing reactive power to or from the utility grid when voltage of the utility grid satisfies a preset variation condition and the generator is disconnected from the utility grid.

With this structure, the reactive power regulating section supplies the reactive power to the utility grid when the voltage of the utility grid satisfies the preset variation condition by a voltage drop in a short time (several seconds or less) due to a ground fault or short circuit caused by a lightning strike or the like and the connection switching section disconnects the generator from the utility grid.
Because the special device (the reactive power regulating section) for regulating the reactive power is provided as described above, it is possible to supply or absorb the stable reactive power to or from the utility grid when the voltage of the utility grid satisfies the preset voltage variation condition.

The above utility grid stabilization apparatus may include a load to be connected with the generator via the connection switching section when the generator is disconnected from the utility grid.
Because the connection switching section connects the generator with the load when the generator is disconnected from the utility grid as described above, output of the generator can be supplied to the load and it is possible to prevent overspeed of the generator. The load is a discharging resistor or the like.

In the above utility grid stabilization apparatus, the reactive power regulating section may have an electricity storage device and an electric power converter.
Because a small capacity of the electricity storage device suffices to compensate for the reactive power as described above, it is possible to miniaturize the reactive power regulating section. As a result, it is possible to easily install the reactive power regulating section in the existing generating system. The electricity storage device is a battery, a capacitor, or the like.

In the above utility grid stabilization apparatus, the reactive power regulating section may have a mounting section to be mounted to the utility grid. As a result, it is possible to easily install the reactive power regulating section to the existing generating system.

A second aspect of the present invention recites a wind power generating system including: a generator having a squirrel-cage induction generator to generate electric power using wind energy; a connection switching section provided between the generator and a utility grid to switch between connection and disconnection of the generator and the utility grid to and from each other; and a reactive power regulating section for supplying or absorbing reactive power to or from the utility grid when voltage of the utility grid satisfies a preset variation condition and the generator is disconnected from the utility grid.

The above wind power generating system may include a load to be connected with the generator via the connection switching section when the generator is disconnected from the utility grid.

In the above wind power generating system, the connection switching section may ground an output terminal of the generator when the generator is connected with the load and output voltage of the generator becomes lower than a specified predetermined value.

A third aspect of the present invention recites a utility grid stabilization method to be applied to a generating system including a generator having a squirrel-cage induction generator to generate electric power using natural energy and a connection switching section provided between the generator and a utility grid to switch between connection and disconnection of the generator and the utility grid to and from each other, the method including providing a reactive power regulating section separately from the generator, the reactive power regulating section supplying or absorbing reactive power to or from the utility grid when voltage of the utility grid satisfies a preset variation condition and the generator is disconnected from the utility grid.

According to the present invention, large-scale civil engineering work is unnecessary and it is possible to supply stable reactive power.

### Brief Description of Drawings

[FIG. 1] FIG. 1 is a block diagram showing an example of a wind power generating system to which a utility grid stabilization apparatus according to an embodiment of the present invention is applied.
[FIG. 2] FIG. 2 is a chart showing an operation flow of the utility grid stabilization apparatus according to the present invention during normal operation.
[FIG. 3] FIG. 3 is a chart showing an operation flow of the utility grid stabilization apparatus according to the present invention when utility grid voltage is decreased.

### Explanation of Reference:

- 1:: Wind power generating system
- 2:: Utility grid stabilization apparatus
- 13:: Generator 13
- 14:: Connection switching section
- 15:: Utility grid
- 16:: Generator voltage sensor
- 17:: Utility grid voltage sensor
- 18:: Control section
- 20:: Load
- 21:: Reactive power regulating section
- 211:: Electric storage device
- 212:: Electric power converter
- 213:: Electric power regulation control section

### Best Mode for Carrying Out the Invention

An embodiment of a utility grid stabilization apparatus and a method as well as a wind power generating system according to the present invention will be described with reference to the drawings.
In the present embodiment, the wind power generating system to which the utility grid stabilization apparatus according to the present invention is applied will be described. A generator in the present embodiment is a squirrel-cage induction generator or the like.

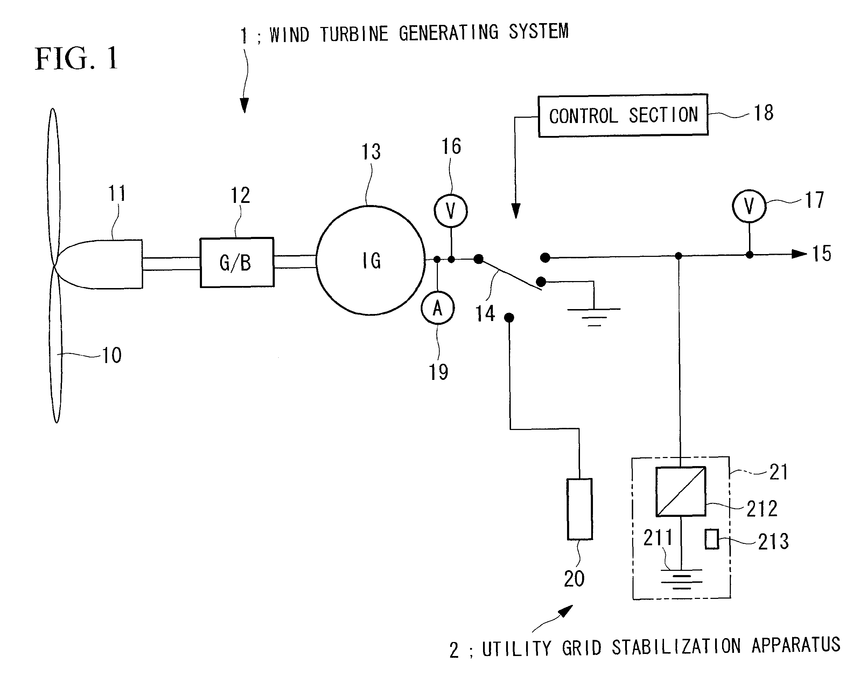

FIG. 1 is a block diagram showing a schematic structure of a wind power generating system 1 to which the utility grid stabilization apparatus according to the present embodiment is applied.
As shown in FIG. 1, the wind power generating system 1 according to the present embodiment includes a wind turbine blades 10, a wind turbine rotor 11, a gear 12, a generator 13 (a generating device) 13, a connection switching section 14, a generator voltage sensor 16, a utility grid voltage sensor 17, a generator current sensor 19, a control section 18, and a utility grid stabilization apparatus 2.

In FIG. 1, the plurality of wind turbine blades 10 is mounted to the wind turbine rotor 11. To a main shaft of the wind turbine rotor 11, the generator 13 is connected via the gear 12 having a predetermined transmission gear ratio. The generator 13 may be connected to the connection switching section 14 by a three-phase electric power line so as to be switched between connection to and disconnection from a utility grid 15 by the connection switching section 14. Connection at the connection switching section 14 is switched by the control section 18.

The generator voltage sensor 16 measures voltage on the generator 13 side with respect to the connection switching section 14 and outputs a measurement result to the control section 18. The utility grid voltage sensor 17 measures voltage on the utility grid 15 side with respect to the connection switching section 14 and outputs a measurement result to the control section 18.
The generator current sensor 19 measures current on the generator 13 side with respect to the connection switching section 14 and outputs a measurement result to a reactive power regulating section 21.

The control section 18 switches connection at the connection switching section 14 and controls the utility grid stabilization apparatus 2 (described later in detail) based on the voltage values detected by the generator voltage sensor 16, the utility grid voltage sensor 17, and the like.

The connection switching section 14 is actuated in response to a signal from the control section 18, when electric power of the utility grid 15 satisfies a preset variation condition due to occurrence of a utility grid failure or the like, and switches from connection to disconnection between the generator 13 and the utility grid 15. More specifically, in a case where the voltage detected by the utility grid voltage sensor 17 satisfies the preset variation condition, the connection switching section 14 disconnects the generator 13 and the utility grid 15 from each other and connects the generator 13 with a load 20. In a case where the voltage on the generator 13 side detected by the generator voltage sensor 16 becomes a predetermined value or less during the generator 13 being connected with the load 20, the connection switching section 14 disconnects the generator 13 from the load 20 and grounds an output terminal of the generator 13. Moreover, in a case where a wind speed condition for the generator 13 is satisfied and is ready for interconnection with the utility grid 15 in this state, the connection switching section 14 connects the generator 13 and the utility grid 15.

The utility grid stabilization apparatus 2 includes the load 20 and the reactive power regulating section 21.
The load 20 is connected with the generator 13 via the connection switching section 14 when the generator 13 and the utility grid 15 are disconnected from each other. More specifically, the load 20 is a discharging resistor and consumes power outputted from the generator 13.
In a state where the load 20 is connected with the generator 13 via the connection switching section 14, a pitch angle of the wind turbine blades 10 is controlled by the control section 18 or another control section provided separately from the control section 18 and control for reducing a rotation speed of the wind turbine blades 10 is carried out.

In the state where the load 20 and the generator 13 are connected via the connection switching section 14, suppressed is a sudden increase in a rotation speed of the wind turbine rotor 11 immediately after the generator 13 is disconnected from the utility grid 15. In a case where the voltage on the generator 13 side detected by the generator voltage sensor 16 becomes the predetermined value or less, the control section 18 disconnects the generator 13 and the load 20 from each other and grounds an output of the generator 13 via the connection switching section 14.

When the voltage of the utility grid 15 satisfies the preset variation condition and the generator 13 and the utility grid 15 are disconnected from each other, the reactive power regulating section 21 regulates the reactive power by supplying or absorbing the reactive power to or from the utility grid 15. The reactive power regulating section 21 is provided with a mounting portion (mounting section) to be mounted to the utility grid 15.

Specifically, the reactive power regulating section 21 has an electric storage device 211, an electric power converter 212, and an electric power regulation control section 213.
The electric power regulation control section 213 determines an amount of reactive current to be supplied to or absorbed from the utility grid 15 based on the voltage on the utility grid 15 side, and regulates the determined amount of reactive current between the utility grid 15 and the electric storage device 211.

More specifically, the electric power regulation control section 213 has information in which the voltage of the utility grid 15 and the reactive current are correlated to each other, and determines the reactive current to be regulated with respect to the voltage on the utility grid 15 side detected by the utility grid voltage sensor 17 based on the information. The electric power regulation control section 213 controls to reduce the amount of the reactive current to be supplied to or absorbed from the utility grid 15 as the voltage of the utility grid 15 approaches a reference voltage value during normal operation.

The electric power converter 212 is an AC/DC converter for converting AC and DC to and from each other. For example, to supply the reactive current of the amount determined by the electric power regulation control section 213 to the utility grid 15, the electric power converter 212 converts DC power stored in the electric storage device 211 into AC power and outputs the converted AC power to the utility grid 15. To absorb the reactive current from the utility grid 15, the electric power converter 212 converts the AC power obtained from the utility grid 15 into DC power and outputs the converted power to the electric storage device 211.

In a state where the generator 13 is connected with the utility grid 15 and the electric power outputted from the generator 13 varies, the electric power regulation control section 213 causes the electric storage device 211 to discharge an amount of electric power corresponding to the variation or to store the amount of electric power so as to level out the output of the generator 13.
Because the reactive power supply section 21 levels out the output of the generator 13 in this manner, it is possible to supply stable power to the utility grid 15.

Next, operations of the wind power generating system 1 according to the present embodiment during normal operation and in the event of a utility grid failure such as a power failure will be described in order.

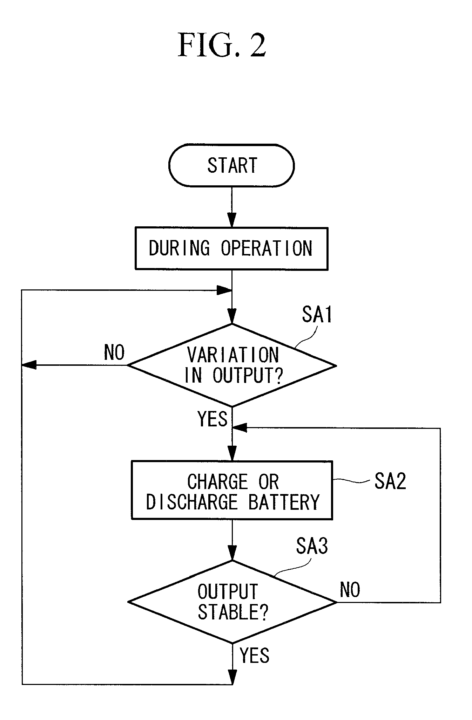

First, the case of the normal operation will be described with reference to FIG. 2.
The voltage on the generator 13 side is measured by the generator voltage sensor 16 at predetermined time intervals and the measurement value is outputted to the reactive power regulating section 21. The electric power regulation control section 213 in the reactive power regulating section 21 determines whether or not the voltage value measured by the generator voltage sensor 16 varied from the reference voltage in a predetermined first voltage range (e.g., ±10% (0.9 to 1.1 Pu)) from the reference voltage) (step SA1).

As a result, in a case where the voltage value measured by the generator voltage sensor 16 varied in the first voltage range, the electric storage device 211 is discharged or charged so as to level out the variation (step SA2). For example, in a case where the wind speed condition is not satisfied, e.g., wind is weak, and active power computed from the voltage and the current measured by the generator voltage sensor 16 and the generator current sensor 19 become lower than a set value for this reason, the electric power converter 212 carries out DC-AC conversion of the electric power stored in the electric storage device 211 and supplies the converted electric power to the utility grid 15 so as to compensate for the reduction of the active power from the set value.

On the other hand, in a case where the active power computed from the voltage and the current measured by the generator voltage sensor 16 and the generator current sensor 19 becomes higher than the set value for a reason that wind is strong or the like, the electric power converter 212 carries out DC-AC conversion of a surplus of the active power over the set value and stores the converted electric power in the electric storage device 211.

Then, the electric power regulation control section 213 determines whether or not the output voltage of the generator voltage sensor 16 has become stable. In a case where the output voltage is stable, the operation returns to step SA1 to continue to monitor variation in the output voltage of the generator voltage sensor 16. In a case where the output voltage of the generator voltage sensor 16 is not stable, the operation returns to step SA2 to continue the electrical discharge or charge until the variation in the output of the generator becomes stable (step SA3).
As described above, by monitoring the output electric power supplied from the generator 13 with the electric power regulation control section 213, the electrical charge and discharge of the electric storage device 211 are controlled and the electric power output from the generator 13 is leveled out.

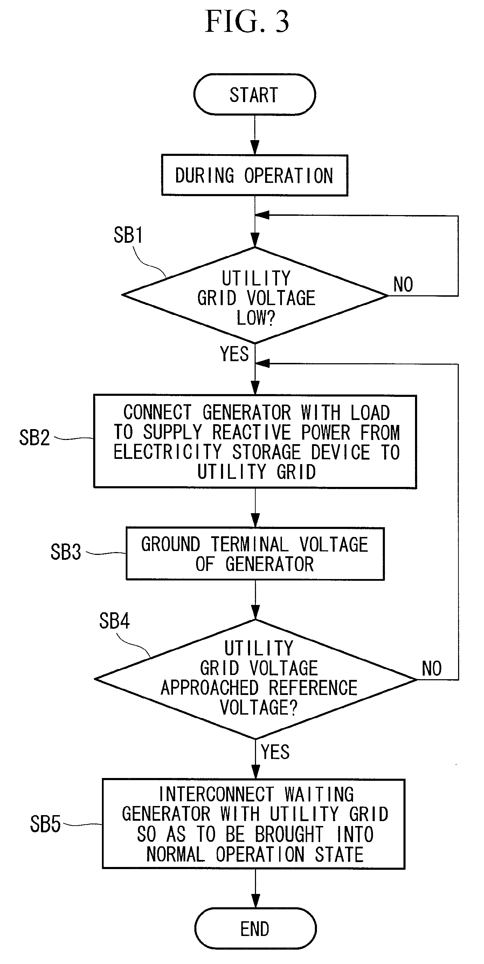

Next, the case where the failure occurred to the utility grid 15 will be described with reference to FIG. 3.
The utility grid voltage sensor 17 measures the voltage of the utility grid 15 and informs the control section 18 of the measurement result. In a case where the voltage of the utility grid 15 satisfies the variation condition, which is specified based on a combination of the amount of variation and time, due to the utility grid failure in the utility grid 15, the control section 18 detects that the voltage of the utility grid 15 varied (step SB1). The variation condition is set such as, a case where the voltage is 20% higher than the reference voltage of the utility grid 15 for 150 milliseconds or more, a case where the voltage is 10% higher than the reference voltage for three seconds or more, a case where the voltage is 10% lower than the reference voltage for 40 milliseconds or more, or the like.

In a case where the control section 18 detects that the voltage of the utility grid 15 satisfies the variation condition, the control section 18 controls the connection switching section 14 to disconnect the generator 13 from the utility grid 15 and to connect the generator 13 with the load 20. In this way, sudden increase in the rotation speed of the wind turbine rotor 11 immediately after the generator 13 is disconnected from the utility grid 15 is suppressed and overspeed of the wind turbine rotor 11 can be prevented (step SB2).

By controlling a pitch angle of the wind turbine blade to a feather side in order to suppress the rotation speed of the wind turbine rotor 11, the output of the generator 13 gradually decreases. When the output of the generator 13 becomes lower than the predetermined value, the control section 18 switches connection of the connection switching section 14 and grounds the generator 13 via the connection switching section 14 (step SB3).
Along with the control described above, the utility grid voltage sensor 17 measures the voltage of the utility grid 15 on the utility grid 15 side and the measurement value is outputted to the electric power regulation control section 213. The electric power regulation control section 213 determines the reactive current corresponding to the voltage detected by the utility grid voltage sensor 17 based on a table kept by the section 213. The electric power regulation control section 213 causes the electric storage device 211 to discharge the electric power and causes the electric power converter 212 to carry out the AC-DC conversion of the discharged DC power and output the converted power to the utility grid 15 so as to supply the determined reactive current to the utility grid 15 (step SB2).

Next, when the wind speed condition or the like for rotating the wind turbine rotor 11 of the generator 13 is satisfied and the voltage of the utility grid 15 approaches the reference voltage (step SB4), the control section 18 controls the connection switching section 14 to connect the generator 13 with the utility grid 15 so as to interconnect the generator 13 (step SB5).

As described above, when the voltage of the utility grid 15 satisfies the preset variation condition, the generator 13 is disconnected from the utility grid 15 and the reactive power is regulated by the special device (the reactive power regulating section 2) for regulating the reactive power. Therefore, it is possible to supply or absorb the stable reactive power to or from the utility grid 15.

As described above, according to the utility grid stabilization apparatus 2 and the method as well as the wind power generating system 1 according to the present invention, when the voltage of the utility grid 15 satisfies the preset variation condition due to the utility grid failure or the like, the connection switching section 14 disconnects the generator 13 from the utility grid 15 and connects the generator 13 with the load 20, and the special device (the reactive power regulating section 21) for supplying the reactive power is connected to the utility grid 15.
As a result, by connecting the reactive power regulating section 21 in the case where the voltage of the utility grid 15 satisfies the variation condition and the generator 13 is disconnected from the utility grid 15, it is possible to supply or absorb the stable reactive power to or from the utility grid 15. In this way, it is possible to stabilize the reactive power upon the utility grid failure while utilizing the existing wind power generating apparatus employing the squirrel-cage induction generator.

Moreover, in the case where the generator 13 is disconnected from the utility grid 15, the generator 13 and the load 20 (e.g., the discharging resistor) are connected with each other to cause the discharging resistor to output the output of the generator 13 and consume electric power. In this way, a sudden increase in the rotation speed of the wind turbine rotor 11 immediately after the generator 13 is disconnected from the utility grid 15 is suppressed and overspeed of the wind turbine rotor 11 can be prevented.

Because the utility grid stabilization apparatus 2 includes the load 20, the electric storage device 211, the electric power converter 212, and the like, it is possible to easily install the stabilization apparatus in the existing wind power generating system provided with the squirrel-cage induction generator.

Although the embodiment of the present invention has been described above in detail with reference to the drawings, the specific structure is not limited to that in this embodiment and may include modifications in design without departing from a gist of the present invention.

## Claims

1. A utility grid stabilization apparatus to be applied to a generating system including a generator having a squirrel-cage induction generator to generate electric power using natural energy and a connection switching section disposed between the generator and a utility grid to switch between connection and disconnection of the generator and the utility grid to and from each other,
the apparatus comprising a reactive power regulating section for supplying or absorbing reactive power to or from the utility grid when voltage of the utility grid satisfies a preset variation condition and the generator is disconnected from the utility grid.

2. A utility grid stabilization apparatus according to claim 1, further comprising a load to be connected with the generator via the connection switching section when the generator is disconnected from the utility grid.

3. A utility grid stabilization apparatus according to claim 1 or 2, wherein the reactive power regulating section includes an electricity storage device and an electric power converter.

4. A utility grid stabilization apparatus according to claim 3, wherein the reactive power regulating section includes a mounting section to be mounted to the utility grid.

5. A wind power generating system comprising:
a generator having a squirrel-cage induction generator to generate electric power using wind energy;
a connection switching section provided between the generator and a utility grid to switch between connection and disconnection of the generator and the utility grid to and from each other; and
a reactive power regulating section for supplying or absorbing reactive power to or from the utility grid when voltage of the utility grid satisfies a preset variation condition and the generator is disconnected from the utility grid.

6. A wind power generating system according to claim 5, further comprising a load to be connected with the generator via the connection switching section when the generator is disconnected from the utility grid.

7. A wind power generating system according to claim 5 or 6, wherein the connection switching section grounds an output terminal of the generator when the generator is connected with the load and output voltage of the generator becomes lower than a specified predetermined value.

8. A utility grid stabilization method to be applied to a generating system including a generator having a squirrel-cage induction generator to generate electric power using natural energy and a connection switching section provided between the generator and a utility grid to switch between connection and disconnection of the generator and the utility grid to and from each other,
the method comprising providing a reactive power regulating section separately from the generator, the reactive power regulating section for supplying or absorbing reactive power to or from the utility grid when voltage of the utility grid satisfies a preset variation condition and the generator is disconnected from the utility grid.
